# EUROPEAN PATENT SPECIFICATION

(11) **EP 2 426 009 B1**
(45) Date of publication and mention of the grant of the patent: **08.05.2013**
(21) Application number: 10769563.7
(22) Date of filing: 12.03.2010
(51) Int. Cl.: B60P 7/06, B60P 7/08, B60R 5/04

(54) **CARGO RETAINER DEVICE FOR VEHICLE**
GEPÄCKHALTEVORRICHTUNG FÜR FAHRZEUGE
DISPOSITIF DE RETENUE DE CHARGE POUR UN VÉHICULE

(30) Priority: 30.04.2009 JP 2009110616
(43) Date of publication of application: 07.03.2012
(73) Proprietor: Ashimori Industry Co., Ltd., Osaka-shi Osaka 550-0014 (JP)
(72) Inventor: TAKEMURA, Seiji, Settsu-shi Osaka 566-0001 (JP); CHINZEI, Hideo, Settsu-shi Osaka 566-0001 (JP)
(74) Representative: Kilian Kilian & Partner
(86) International application number: PCT/JP2010/054171
(87) International publication number: WO 2010/125863

(56) References cited:
- EP-A1- 1 398 208
- DE-A1-102005 061 493
- DE-U1-202006 010 599
- GB-A- 2 430 466
- JP-A- 2000 052 848
- JP-A- 2000 103 278
- JP-A- 2002 331 865
- JP-A- 2007 001 396
- JP-A- 2008 260 525

## Description

### Technical Field

The present invention relates to a cargo retaining device for retaining a cargo on a vehicle floor or the like.

### Background Art

A conventional cargo retaining device of this type is disclosed in Japanese Patent Application Laid-Open No. 2005-67393.

Japanese Patent Application Laid-Open No. 2005-67393 discloses a cargo retaining device in which an interlocking member that is movable and fastenable at an appropriate position is provided in a guide rail and the side edge of a net member or the like is mounted onto the interlocking member in a removable manner, for retaining a cargo. The interlocking member includes a pair of washer members that sandwich an upper wall of the guide rail therebetween. The interlocking member is movable when a screw member screwed with the pair of washer members is loosened, while the interlocking member is locked when the screw member is tightened.
Moreover, the prior art document GB 2 430 466 A discloses a track fitting. The track fitting is provided with a spring loaded plunger for use in securing an anchor to a floor track mounted in a vehicle. The anchor includes at least one engaging lug and a spring-loaded plunger with at least one post. When the plunger is in an extended position, the at least one post is in registration with an opening in the track, to lock the anchor into the floor track. The fitting includes visual indicia to signal an installer that the plunger is at least approximately in the locked position. The indicia may comprise grooves provided on the anchor and plunger, such that alignment of the groves shows that the anchor is locked. Alternatively, the indicia may comprise geometric shapes, such as circles, a lifting knob, a tab or viewing window. The plunger may be spring loaded. The track fitting may be used to secure a wheelchair or the like to a floor track mounted in a vehicle.

### Summary of the Invention

### Problem to be Solved by the Invention

Unfortunately, in the cargo retaining device disclosed in Japanese Patent Application Laid-Open No. 2005-67393, one of the washer members is required to be disposed in the guide rail, which makes it difficult to mount and remove the interlocking member to and from the guide rail with ease.

Recently, multi-purpose vehicles such as a three-row sheet vehicle are particularly popular, and the use of a vehicle floor is proposed depending on various scenes. For example, in a third-row seat vehicle in which the seats of the second and third rows are provided so as to move back and forth along the rails, it is desired to retain a cargo in a cargo compartment or retain a cargo between the seats depending on the fore-and-aft positions of the seats. In order to satisfy this desire, the cargo retaining device is required to be easily mounted to and removed from the guide rail.

The present invention therefore has an object to allow the cargo retaining device to be mounted to and removed from the guide rail with ease. This object is achieved by a cargo retaining device according to claim 1. Further advantageous embodiments of the invention are the subject-matter of the dependent claims. Aspects of the invention are set out below.

### Means to Solve the Problem

A cargo retaining device for a vehicle according to a first aspect is mountable to a guide rail including a pair of guide pieces opposed to each other through a slit, which includes, a pedestal part including an abutting part configured to be located so as to straddle the pair of guide pieces; an interlocking part located on the pedestal part for retaining a cargo; a shaft body movably supported by the pedestal part along an axis direction such that one end thereof is projected from the abutting part side and that the other end thereof is projected from a side opposite to the abutting part; a locking part formed into an elongated shape having a width dimension smaller than a width dimension of the slit and a length dimension larger than the width dimension of the slit, and located so as to move close to and apart from the pedestal part by being supported by the one end of the shaft body; and a locking lever supported by the other end of the shaft body so as to change a position between a locked position for pulling the locking part up to the pedestal part side and an unlocked position for allowing the locking part to be apart from the pedestal part.

According to a second aspect, in the first aspect, the cargo retaining device for a vehicle further includes a spacing elastic member biasing the locking part in a direction in which the locking part goes apart from the pedestal part.

According to a third aspect, in the cargo retaining device for a vehicle according to the first or second aspect, the pedestal part includes a leg piece movably located in the slit.

According to a fourth aspect, in the cargo retaining device for a vehicle according to the third aspect, the leg piece includes a positioning extended part formed so aspect, so as to be engaged with a positioning recess of the guide rail, the positioning recess being formed to be opposed to the slit.

According to a fifth aspect, in the cargo retaining device for a vehicle according to any one of the first to fourth aspects, the locking part is supported by the one end of the shaft body so as not to rotate; the other end of the shaft body is supported by the pedestal part so as to rotate; and the locking part is rotated about an axis of the shaft body through

According to a sixth aspect, in the cargo retaining device for a vehicle according to any one of the first to fifth aspects, the pedestal part includes a pair of bearing parts provided in a projecting manner and supporting the interlocking part in a manner such that a position thereof is changeable; and the locking lever is disposed between the pair of bearing parts in the locked position.

According to a seventh aspect, in the cargo retaining device for a vehicle according to any one of the first to sixth aspects, the pedestal part includes a pair of bearing parts provided in a projecting manner and supporting the interlocking part such that a position thereof is changeable; and a ring member is located between each of the pair of bearing parts and each of the both ends of the interlocking part at which the interlocking part is supported by the bearing parts.

According to an eighth aspect, in the cargo retaining device for a vehicle according to any one of the first to seventh aspects, the pedestal part includes a lever receiving part receiving the locking lever upon the locking lever changing the position to a standing position.

According to a ninth aspect, in the cargo retaining device for a vehicle according to any one of the first to eighth aspects, the pedestal part includes a lock state display part showing the position of the locking lever.

According to a tenth aspect, in the cargo retaining device for a vehicle according to any one of the first to ninth aspects, the pedestal part comprises zinc.

According to an eleventh aspect, in the cargo, retaining device for a vehicle according to any one of the first to tenth aspects, the shaft body pulls the locking part up to the pedestal part side through an intermediate elastic member upon the locking lever changing the position.

According to a twelfth aspect, in the cargo retaining device for a vehicle according to the eleventh aspect, the intermediate elastic member includes a plurality of disc springs disposed in series.

### Effects of the Invention

According to the cargo retaining device for a vehicle of the first aspect, the width dimension of the locking part is smaller than the width dimension of the slit and the length dimension thereof is larger than the width dimension of the slit, which allows the locking part to be easily inserted into and removed from the slit between a pair of guide pieces. When the position of the locking part is changed from the unlocked position to the locked position in the state in which the locking part is disposed in the guide rail through the slit, the locking part is pulled toward the pedestal part side, and the pair of guide pieces are sandwiched between the abutting part of the pedestal part and the locking part. This allows the cargo retaining device to be fastened at a fixed location with respect to the guide rail. While, the cargo retaining device can be removed from the guide rail in an opposite manner to the above. Accordingly, it is possible to easily mount and remove the cargo retaining device to and from the guide rail.

According to the second aspect, the locking part is biased at the location apart from the pedestal part by the spacing elastic member with more reliability in the state in which the locking lever is in the unlocked position, and thus a large clearance is formed between the pedestal part and the locking part. This enables to easily provide a pair of guide pieces between the pedestal part and the locking part and mount the cargo retaining device smoothly.

According to the third aspect, it is possible to maintain the position of the pedestal part constant with respect to the extending direction of the slit.

According to the fourth aspect, the cargo retaining device can be fastened at the fixed location with respect to the extending direction of the guide rail with more reliability.

According to the fifth aspect, the locking lever is operated to rotate in the state in which the pedestal part is kept in the fixed position with respect to the extending direction of the slit, which enables switching between the state in which the locking part can be inserted into and removed from the slit and the state in which the locking part is caused to abut against a pair of guide pieces.

According to the sixth aspect, the locking lever is disposed between a pair of bearing parts in the locked position, whereby locking is prevented from being inadvertently released.

According to the seventh aspect, the ring member is located between each of the pair of bearing parts and each of the both ends of the interlocking part at which the interlocking part is supported by the bearing parts, which stabilizes the operation force for changing the position of the interlocking part and prevents the interlocking part from rattling.

According to the eighth aspect, the locking lever can be prevented from tilting further toward the pedestal part side after changing the position to the standing position, which prevents the other member from being sandwiched between the locking lever and the pedestal part.

According to the ninth aspect, the lock state of the cargo retaining device can be realizing by the lock state display part depending on the position of the locking lever.

According to the tenth aspect, in a case where the pedestal part impacts the other member with severe force, the pedestal part is damaged, which prevents the other member from being damaged.

According to the eleventh aspect, the shaft body pulls the locking part up to the pedestal part side through the intermediate elastic member, which makes it easier to attain the retaining force even if unevenness is found in the thickness of the pair of guide pieces.

According to the twelfth aspect, it is possible to obtain a relatively large biasing force in the relatively limited space while maximizing the flexure amount of the elastic body.

### Brief Description of Drawings

FIG. 1 is a perspective view showing a cargo retaining device for a vehicle according to an embodiment.
FIG. 2 is a side view showing the cargo retaining device.
FIG. 3 is a plan view showing the cargo retaining device.
FIG. 4 is a bottom view showing the cargo retaining device.
FIG. 5 is an exploded perspective view showing the cargo retaining device.
FIG. 6 is a partial cross-sectional view taken along the line VI-VI of FIG. 3.
FIG. 7 is a partial side view showing an intermediate elastic member.
FIG. 8 is a partially broken perspective view showing the operation of mounting the cargo retaining device to a guide rail.
FIG. 9 is a partially cutaway side view showing the operation of mounting the cargo retaining device to the guide rail.
FIG. 10 is a partially broken perspective view showing the operation of mounting the cargo retaining device to the guide rail.
FIG. 11 is a partially cutaway side view showing the operation of mounting the cargo retaining device to the guide rail.
FIG. 12 is a partially broken bottom view showing the operation of mounting the cargo retaining device to the guide rail.
FIG. 13 is a partially broken perspective view showing the operation of mounting the cargo retaining device to the guide rail.
FIG. 14 is a partially cutaway side view showing the operation of mounting the cargo retaining device to the guide rail.
FIG. 15 is a partially broken bottom view showing the operation of mounting the cargo retaining device to the guide rail.
FIG. 16 is a partially broken perspective view showing the state in which the cargo retaining device is mounted to the guide rail.
FIG. 17 is a partially cutaway side view showing the state in which the cargo retaining device is mounted to the guide rail.
FIG. 18 is an explanatory view showing the state in which a guide member of a seat and the cargo retaining device collide with each other.

### Embodiment for Carrying Out the Invention

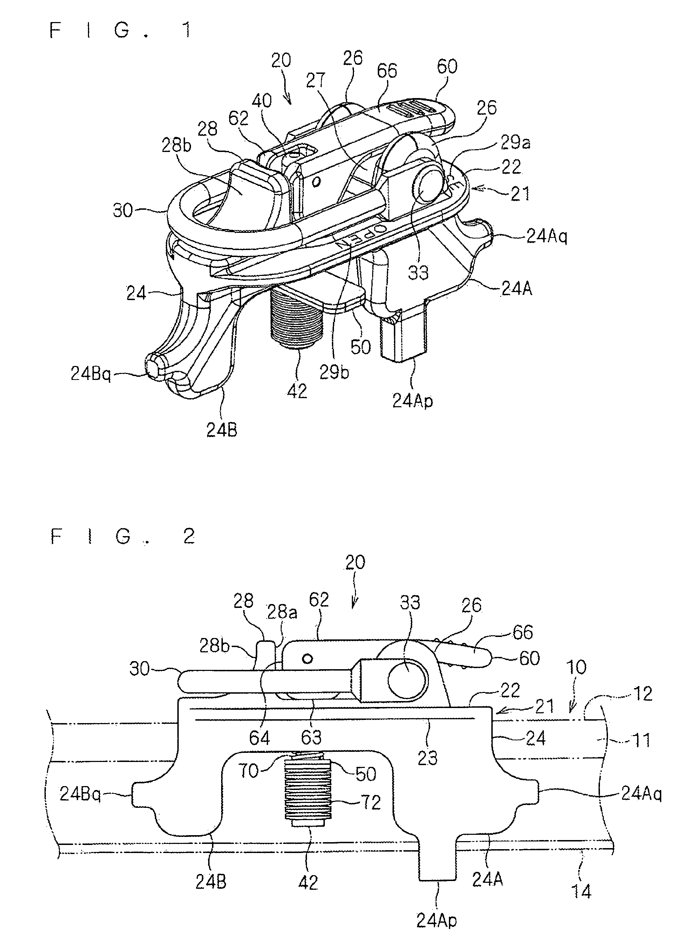

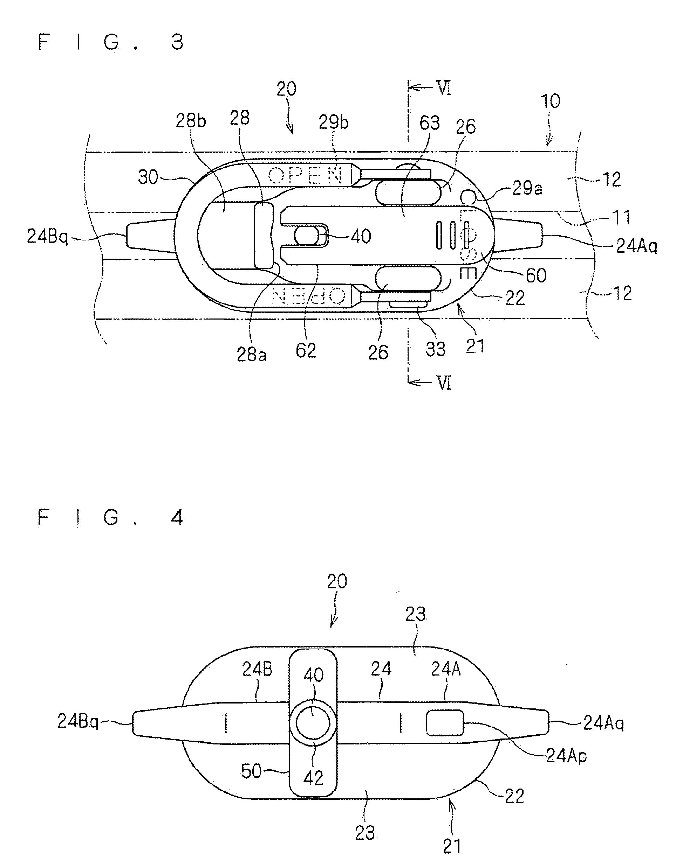

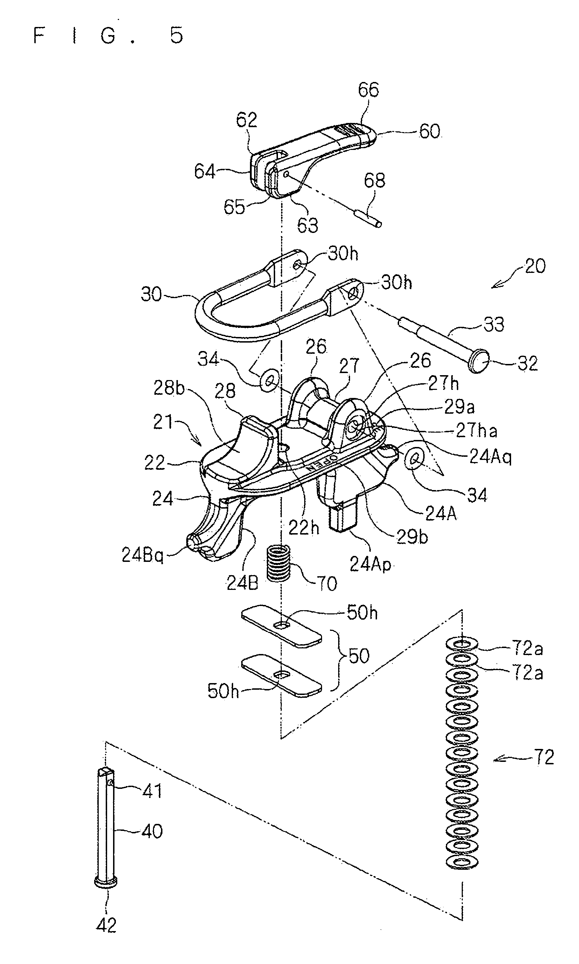

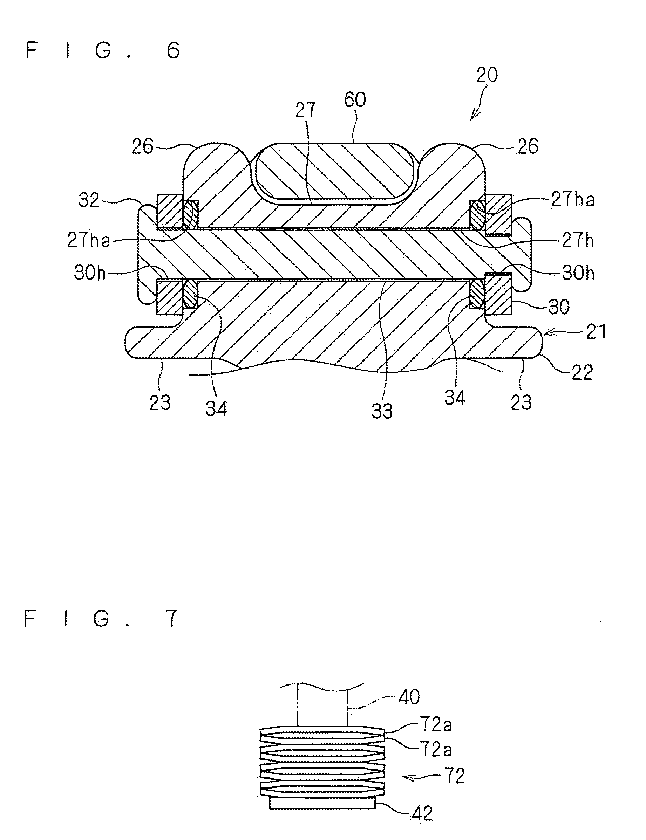

A cargo retaining device for a vehicle according to an embodiment is described below. FIG. 1 is a perspective view showing a cargo retaining device 20, FIG. 2 is a side view showing the cargo retaining device 20, FIG. 3 is a plan view showing the cargo retaining device 20, FIG. 4 is a bottom view showing the cargo retaining device 20, FIG. 5 is an exploded perspective view showing the cargo retaining device 20, and FIG. 6 is a partial cross-sectional view taken along the line VI-VI of FIG. 3.

The cargo retaining device 20 is configured so as to be mounted to a guide rail 10 fixed to a vehicle in a removable manner. Further, a net or a rope (including extendible one) for securing a cargo, or a hook or the like attached to the end thereof is interlocked so as to hooked to the cargo retaining device 20 in the state in which the cargo retaining device 20 is mounted to be fixed to a fixed position in an extending direction of the guide rail 10.

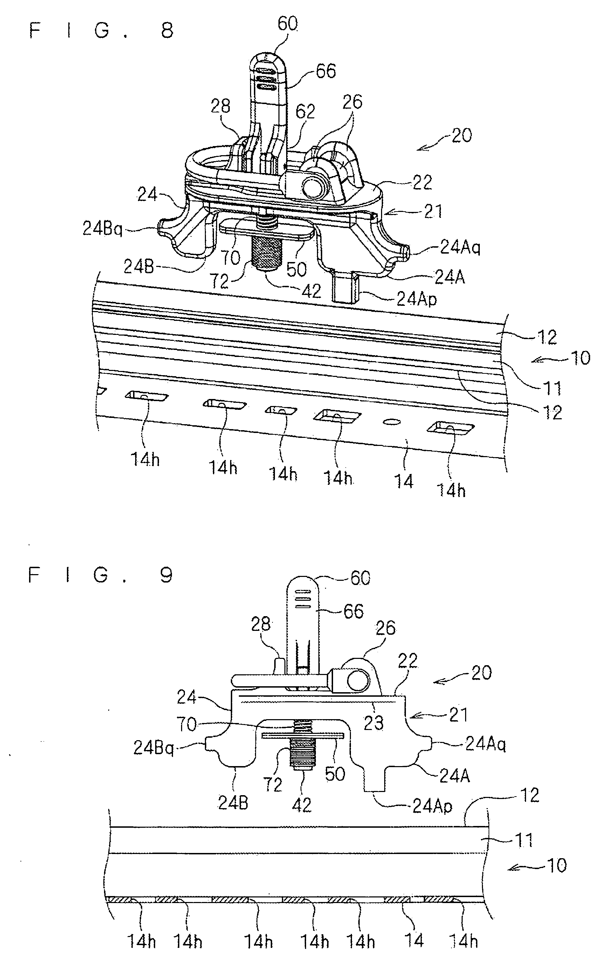

The guide rail 10 is a rail laid at a predetermined position of a vehicle and, in this case, description is given of an example in which the guide rail 10 is laid along the fore-and-aft direction on a floor of a room and is configured so as to support a seat in a movable manner in the fore-and-aft direction. The guide rail 10 is formed approximately into a square tube shape, which has a pair of guide pieces 12 opposed to each other through a slit 11 on its upper side. Note that in this case, the edge of the guide piece 12 on the slit 11 side is folded toward the inside of the guide rail 10, and accordingly the edge of the guide piece 12 has a thickness larger than the thickness of a plate member forming the guide piece 12 itself. A locking part 50 abuts against the edge of the guide rail 10 in a locked state descried below, and thus description is given below assuming that the thickness dimension of the guide rail 10 refers to the thickness dimension of the edge thereof. The guide member of the seat is disposed in the guide rail 10 through the slit 11 and is supported movably along the guide rail 10. Further, a plurality of positioning recesses 14h are formed at intervals in a bottom 14 opposed to the slit 11, along the extending direction of the slit 11 (see FIG. 8). When a positioning regulation piece of the guide member is fitted into one of the plurality of positioning recesses 14h, a guide member, that is, a seat is positioned to be fixed.

The cargo retaining device 20 includes a pedestal part 21, an interlocking part 30, a shaft body 40, the locking part 50 and a locking lever 60. Further, the net or rope for fastening a cargo, or a hook or the like is interlocked to the interlocking part 30 mounted onto the pedestal part 21 so as to be hooked. In addition, the locking part 50 is supported so as to move close to and apart from the pedestal part 21 through the shaft body 40. Further, when the locking part 50 is moved close to the pedestal part 21 by the operation for the locking lever 60 in the state in which the locking part 50 is disposed in the guide rail 10, a pair of guide pieces 12 are sandwiched between the pedestal part 21 and the locking part 50, so that the cargo retaining device 20 is fastened at a fixed position with respect to the guide rail 10,

Respective parts are described more specifically.

The pedestal part 21 includes a pedestal body part 22 including an abutting part 23 that can be disposed so as to straddle a pair of guide pieces 12. In this case, the pedestal body part 22 is formed approximately in an oval shape in plan view, and the dimension thereof in a short axis direction is formed to be larger than the width of the slit 11. Further, one main surface side in both long side portions of the pedestal body part 22 serve as the abutting part 23 so as to abut against the pair of guide pieces 12 in a sliding manner.

Further, a leg piece 24 movably disposed in the slit 11 is formed in a projecting manner on the one main surface side (side that faces the pair of guide pieces 12) of the pedestal body part 22. More specifically, the plate-like leg piece 24 extending along the long axis direction of the pedestal body part 22 is formed approximately in an intermediate part in the width direction on one main surface of the pedestal body part 22. The thickness dimension (dimension in the short axis direction of the pedestal part 21) of the leg piece 24 is formed to be smaller than the width dimension of the slit 11 (in this case, to be somewhat small to such an extent that the position of the leg piece 24 can be kept constant in the slit 11). Further, both ends of the leg piece 24 in the longitudinal direction are formed into projecting leg pieces 24A and 24B projecting considerably beyond the intermediate part in the longitudinal direction thereof. The projecting dimension of each of the projecting leg pieces 24A and 24B is formed to such an extent that it extends immediately in front of the bottom 14 in the state in which the abutting part 23 abuts against the pair of guide pieces 12. Further, formed at the tip of the leg piece 24A is a positioning extended part 24Ap that can be disposed in the positioning recess 14h formed in the bottom part 14 so as to extend beyond the bottom part 14 in the state in which the abutting part 23 abuts against the pair of guide pieces 12.

The abutting part 23 of the pedestal body part 22 is brought into sliding contact with the outer surfaces of the pair of guide pieces 12 such that the leg piece 24 is disposed in the slit 11, whereby the pedestal part 21 is movable with respect to the guide rail 10 in a fixed position in which the long axis direction of the pedestal body part 22 is provided along the extending direction of the slit 11. Further, the positioning extended part 24Ap of the leg piece 24A is interlocked to the positioning recess 14h formed in the bottom part 14 in such a manner of being fitted thereinto, with the result that the pedestal part 21 is positioned with respect to the guide rail 10 in its extending direction.

Note that the projecting dimension of the intermediate part of the leg piece 24 in the longitudinal direction is smaller than the thickness dimension of the pair of guide pieces 12 that sandwich the slit 11 therebetween, and the pair of guide pieces are sandwiched between the pedestal part 21 and the locking part 50 as described below.

Further, the projecting leg pieces 24A and 24B include extending parts 24Aq and 24Bq projecting outwardly in the long axis direction of the pedestal body part 22, respectively. In a case where the cargo retaining device 20 is close to the guide member of the seat, the extending parts 24Aq and 24Bq abut against the portions having a relatively large strength, such as a metal portion of the guide member, before the pedestal body part 22 abuts against the portion having a relatively small strength of the guide member, such as a resin portion.

The pedestal part 21 is preferably made of zinc. The pedestal part 21 is manufactured by, for example, die casting or cutting. The benefit obtained by forming the pedestal part 21 of zinc is described below.

The interlocking part 30 is the member for retaining a cargo by interlocking and fastening the net or rope for fastening the cargo, or the hook or the like mounted to the end thereof and, in this case, is the member formed of an approximately U-shaped metal rod. The interlocking part 30 is mounted onto the pedestal body part 22 with the configuration described below.

That is, at one end of the pedestal body part 22 on the surface opposite to the leg piece 24, a pair of bearing parts 26 are provided in a projecting manner at a distance along the short axis direction of the pedestal body part 22. The pair of bearing parts 26 are connected to each other through a bearing relay part 27 that is provided to the pedestal body part 22 in a projecting manner (see FIG. 5 and FIG. 6). Note that the bearing relay part 27 has a projecting dimension smaller than that of the bearing part 26 and the end of the locking lever 60 described below can be disposed between the pair of bearing parts 26 on the bearing relay part 27.

A through-hole 27h is formed so as to pass through the pair of bearing parts 26 and the bearing relay part 27 along the short axis direction of the pedestal body part 22 (see FIG. 5 and FIG. 6). Annular grooves 27ha are formed around the openings at both ends of the through-hole 27h on the outer surfaces of the pair of bearing parts 26. O-ring 34 are disposed in the annular grooves 27ha as the ring member formed of a rubber, soft resin or the like.

Further, pivot holes 30h are formed at both ends of the interlocking part 30 (see FIG. 5 and FIG. 6).

In the state in which the O-rings 34 are disposed in the annular grooves 27ha and the pivot holes 30h at both ends of the interlocking part 30 and the through-hole 27h are disposed on the same straight line, a pin member 33 including a head part 32 at one end is inserted into the pivot holes 30h and the through-hole 27h. Then, for example, the other end of the pin member 33, which projects from the through-hole 27h and the pivot hole 30h, is crushed, whereby the pin member 33 is fixed so as not to come out.

In this state, the both ends of the interlocking part 30 are rotatably supported by the pair of bearing parts 26 through the pin member 33. This allows the interlocking part 30 to be supported in such a manner that it can change the position with respect to the pedestal body part 22. Moreover, in this state, each of the 0-rings 34 is located in a compressed manner between one or the other of the pair of bearing parts 26 and the interlocking part 30.

The O-rings 34 respectively located between the bearing part 26 and both ends of the interlocking part 30 in a compressed manner prevent the bearing parts 26 and the interlocking part 30 from directly contacting with each other, which stabilizes the operating force when the position of the interlocking part 30 is changed and also prevents the interlocking part 30 from rattling with the bearing parts 26.

The axis of rotation of the interlocking part 30 and the axis of rotation of the locking lever 60 described below are separately set, and even in a case where the member for fastening a cargo is interlocked to the interlocking part 30 and the position of the interlocking part 30 is changed, the locking lever 60 itself resists rotation so as not to be unlocked inadvertently.

Needless to say, the interlocking part may be fastened in a fixed location and a fixed position with respect to the pedestal part. Alternatively, the interlocking part may be formed into an approximately J-shaped hook.

The shaft body 40 is formed into an elongated rod-shaped member, where one end thereof has a flanged fastening part for the locking part 42 while the other end thereof has a support hole 41 for supporting the locking lever 60 in such a manner that the position of the locking lever 60 is changeable (see FIG. 5). Further, at least the portion on one end side of the shaft body 40, which holds the locking part 50 through penetration, is formed to have a non-circular cross-section. In this case, the shaft body 40 is formed to have a shape obtained by cutting both ends of a round bar to be plane.

The shaft body 40 is supported movably with respect to the pedestal part 21 as described below. That is, a through-hole 22h is formed so as to pass through the pedestal main body 22, approximately in the intermediate part of the pedestal body part 22 in the long axis direction, more specifically, approximately in the portion which is the center part of a pair of projecting leg pieces 24A and 24B (see FIG. 5). One end of the shaft body 40 is projected from the abutting portion 23 side and the other end thereof is projected from the side opposite to the abutting part 23, so that the shaft body 40 is movably and rotatably supported in the through-hole 22h of the pedestal body part 22 along the axis direction thereof.

The locking part 50 is formed in an elongated plate shape, where the width dimension thereof is formed to be smaller than the width dimension of the slit 11 and the length dimension thereof is formed to be larger than the width dimension of the slit 11. Although the locking part 50 is composed of two layered plate members in this case, it may be formed of one plate member. Alternatively, the locking part 50 does not need to be a plate member and may be a rod-shaped member. Further, a locking part insertion hole 50h, into which the non-circular cross-sectional portion of the shaft body 40 can be inserted, is formed approximately in the intermediate part of the locking part 50 (see FIG. 5). The non-circular cross-sectional portion of the shaft body 40 is inserted into the locking part insertion hole 50h so as to be positioned between the pedestal body part 22 and the fastening part for the locking part 42. This allows the locking part 50 to be supported by one end of the shaft body 40 so as to move close to and apart from the pedestal part 21 and so as not to rotate about the shaft body 40.

A coil spring 70 as a spacing elastic member is fitted onto the shaft body 40 so as to be located between the pedestal body part 22 and the locking part 50 in a compressed manner. The coil spring 70 biases the locking part 50 in the direction to be apart from the pedestal body part 22. Note that the spacing elastic member may be a disc spring, a rubber or the like in addition to a coil spring.

Further, an intermediate elastic member 72 is provided between the locking part 50 and the fastening part for the locking part 42. The elastic force of the intermediate elastic member 72 is set to be larger than the elastic force of the coil spring 70. Accordingly, when the shaft body 40 is pulled above the pedestal body part 22, the fastening part for the locking part 42 of the shaft body 40 pushes the locking part 50 toward the pedestal body part 22 side through the intermediate elastic member 72 while deforming the coil spring 70 by compression.

In this case, as shown in FIG. 7, the intermediate elastic member 72 is composed of a plurality of disc springs 72a that are fitted onto the shaft body 40 and are disposed in series. As described below, the shaft body 40 is configured to pull the locking part 50 up to the pedestal body part 22 through the intermediate elastic member 72 when the shaft body 40 is pulled toward the side opposite to the abutting part 23 upon change in position of the locking lever 60.

The use of a plurality of disc springs 72a disposed in series as the intermediate elastic member 72 enables to attain a relatively large biasing force in the relatively limited space in the guide rail 10 while maximizing an elastic deformation amount of the intermediate elastic member 72.

Needless to say, the intermediate elastic member 72 may be a plurality of disc springs disposed in parallel, one disc spring, a coil spring, or a member such as a rubber.

Referring now back to FIG. 1 to FIG. 6, the locking lever 60 is supported by the other end of the shaft body 40 so as to change its position. When the position of the locking lever 60 is changed between the locked position (see FIG. 1 to FIG. 4) and the unlocked position (see FIG. 8 and FIG. 9), the shaft body 40 moves in the axis direction so that the locking part 50 moves close to and apart from the pedestal body part 22.

More specifically, the locking lever 60 includes a cam part 62 rotatably supported by the other end of the shaft body 40 through a pin 68 (see FIG. 5) and an operation part 66 extending from the cam part 62.

The cam part 62 has a lock surface 63 and a lock release surface 64 that are linked to each other through a rounded corner part 65. The lock surface 63 and the lock release surface 64 are substantially orthogonal to each other, and the distance between the axis of rotation of the cam part 62 and the lock surface 63 is formed to be larger than the distance between the axis of rotation of the cam part 62 and the lock release surface 64. Further, the corner part 65 is configured to change its position between the position in which the lock surface 63 is in contact with the pedestal body part 22 and the position in which the lock release surface 64 is in contact with the pedestal body part 22, with a predetermined position in which the corner part 65 is in contact with the pedestal body part 22 as the boundary position. In particular, the state in which the lock surface 63 is in contact with the pedestal body part 22 and the state in which the lock release surface 64 is in contact with the pedestal body part 22 can be kept to be constant.

Further, the operation part. 66 is formed to extend toward the side opposite to the lock release surface 64.

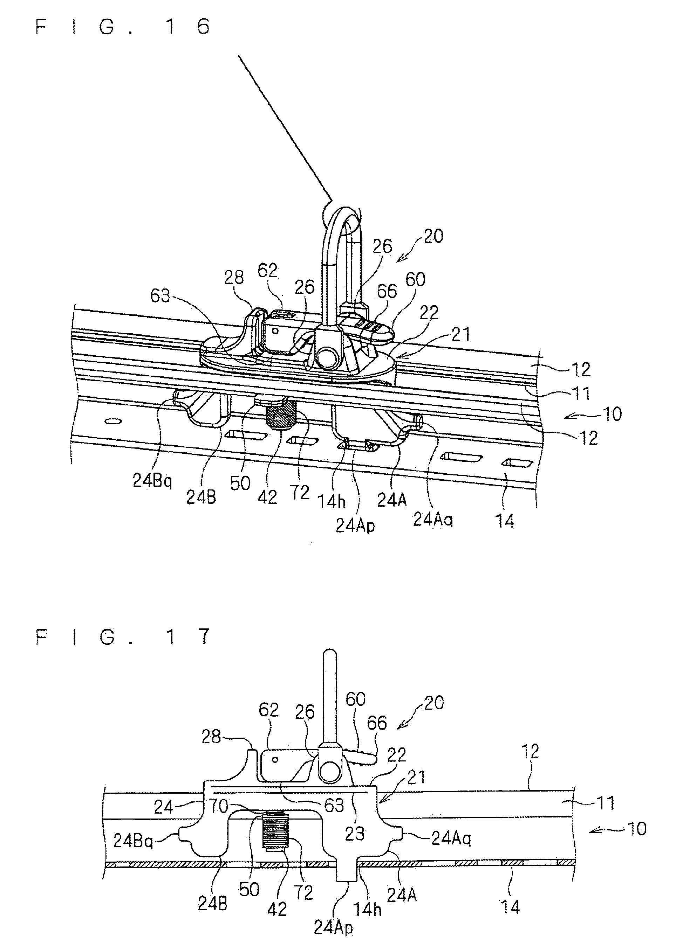

The position of the operation part 66 is changed so as to be vertically arranged with respect to the pedestal body part 22, whereby the lock release surface 64 is brought into contact with the pedestal body part 22 and the other end of the shaft body 40 is pushed into the pedestal body part 22. As a result, the fastening part for the locking part 42 at one end of the shaft body 40 moves in the direction to be apart from the pedestal body part 22, thereby obtaining the state in which the fastening part for the locking part 42 is movable in the direction to be apart from the pedestal body part 22. Further, from the above-mentioned state, the operation part 66 changes its position so as to lie on the pedestal body part 22 by being tilted through the state in which the corner part 65 is in contact with the pedestal body part 22, the lock surface 63 is brought into contact with the pedestal body part 22, thereby obtaining the state in which the other end of the shaft body 40 is pulled from the pedestal body part 22. As a result, the fastening part for the locking part 42 at one end of the shaft body 40 moves in the direction to be close to the pedestal body part 22, and the fastening part for the locking part 42 is pulled into the pedestal body part 22 side (see FIG. 16 and FIG. 17).

As described above, the position of the locking lever 60 is changeable between the locked position in which the locking part 50 is pulled up to the pedestal body part 22 (position in which the locking lever 60 lies on the pedestal body part 22) and the unlocked position in which the locking part 50 is capable of becoming apart from the pedestal body part 22 (position in which the locking lever 60 stands on the pedestal body part 22).

In the state in which the locking lever 60 enters the locked state as described above, the pair of bearing parts 26 are disposed at the positions at which the operation part 66 is sandwiched therebetween. This allows the operation part 66 to be arranged between the pair of bearing parts 26 when the position of the locking lever 60 is changed to the locked position.

The locking lever 60 is supported by the other end of the shaft body 40 so as not to rotate in the axis direction of the shaft body 40. Accordingly, when the locking lever 60 is operated to rotate about the axis of the shaft body 40, the locking part 50 rotates about the axis of the shaft body 40 through the shaft body 40.

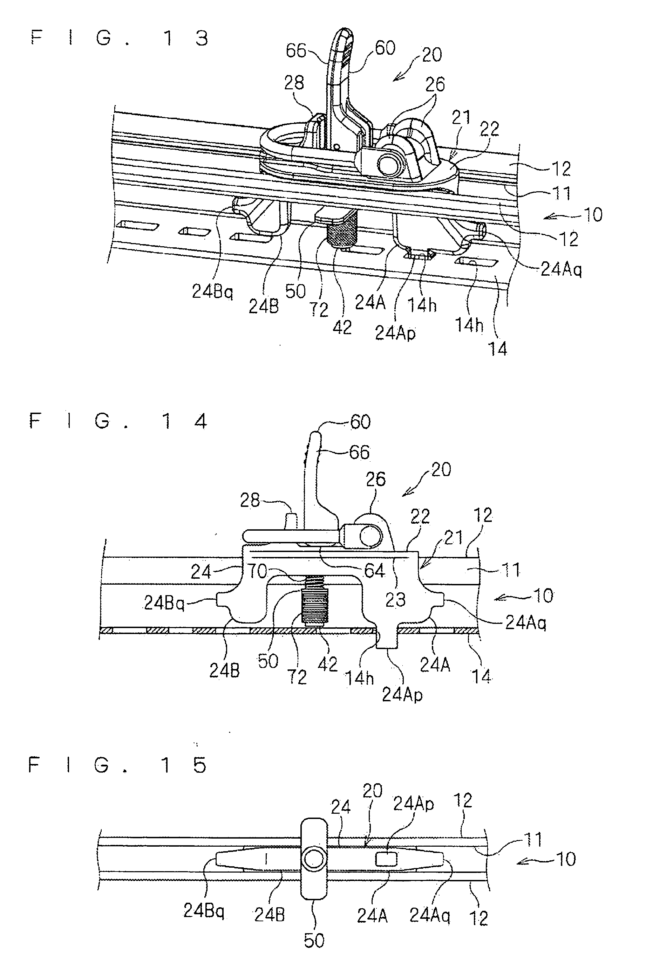

Arranged vertically with respect to the pedestal body part 22 is a lever receiving part 28 that receives the locking lever 60 when the locking lever 60 changes its position, from the lying state to the standing position, that is, from the locked position to the unlocked position. More specifically, the lever receiving part 28 is vertically arranged on the side opposite to the side to which the operation part 66 extends in the locked position (lying position). The portion of the lever receiving part 28 on the shaft body 40 side is formed into a flat surface 28a extending substantially perpendicularly to the upper surface of the pedestal body part 22 (see FIG. 2 and FIG. 13), and the locking lever 60 whose position has been changed from the lock position to the unlocked position is received by the flat surface 28a, so that the locking lever 60 is prevented from changing its position in such a manner of tilting further toward the pedestal body part 22 side beyond the unlocked position. This prevents the locking lever 60 from tilting further toward the pedestal body part 22 side after being changed to the standing position, which prevents any member or the like from being sandwiched between the locking lever 60 and the pedestal body part 22.

Further, the portion of the lever receiving part 28 on the side opposite to the shaft body 40 is formed into a curved recessed surface 28b. The locking lever 60 is operated to be pulled up by one finger (for example, index finger) while bringing the other finger (for example, thumb) into contact with the curved recessed surface 28b when the position of the locking lever 60 is changed from the locked position to the unlocked position, so that the locking lever 60 is operated to change its position.

Provided in the pedestal body part 22 are lock state display parts 29a and 29b showing the position of the locking lever 60 (see FIG. 1, FIG. 3 and FIG. 5). In this case, the lock state display part 29a in which the letters of "CLOSE" indicating the locked state are formed by a concavoconvex shape such as inscription is provided in the portion of the pedestal body part 22, which is the surface on the side opposite to the abutting part 23 and is located outside of the pair of bearing pars 26. In addition, the lock state display parts 29b in which the letters of "OPEN" indicating the unlocked state are formed by a concavoconvex shape are provided in the portions of the pedestal body part 22, which are the surface on the side opposite to the abutting part 23 and are located on both sides of the shaft body 40.

The user of the cargo retaining device 20 is capable of realizing the lock state of the cargo retaining device 20 and the operating direction of the locking lever 60 when the cargo retaining device 20 is mounted and removed by observing the lock state display parts 29a and 29b.

Note that the configuration in which the lock state display parts 29a and 29b are provided is not limited to the above-mentioned example. For example, only any one of the locked state and the unlocked state may be displayed, display may be made by other letters, symbols or the like, or display may be made by, for example, printing.

The procedure of mounting the thus configured cargo retaining device 20 to the guide rail 10 is described.

As shown in FIG. 8 and FIG. 9, first, the locking lever 60 is rotated about the axis of the shaft body 40 in the state in which the locking lever 60 is in the unlocked position (standing position), so that the long axis direction of the pedestal body part 22 and the longitudinal direction of the locking part 50 are identical to each other in direction.

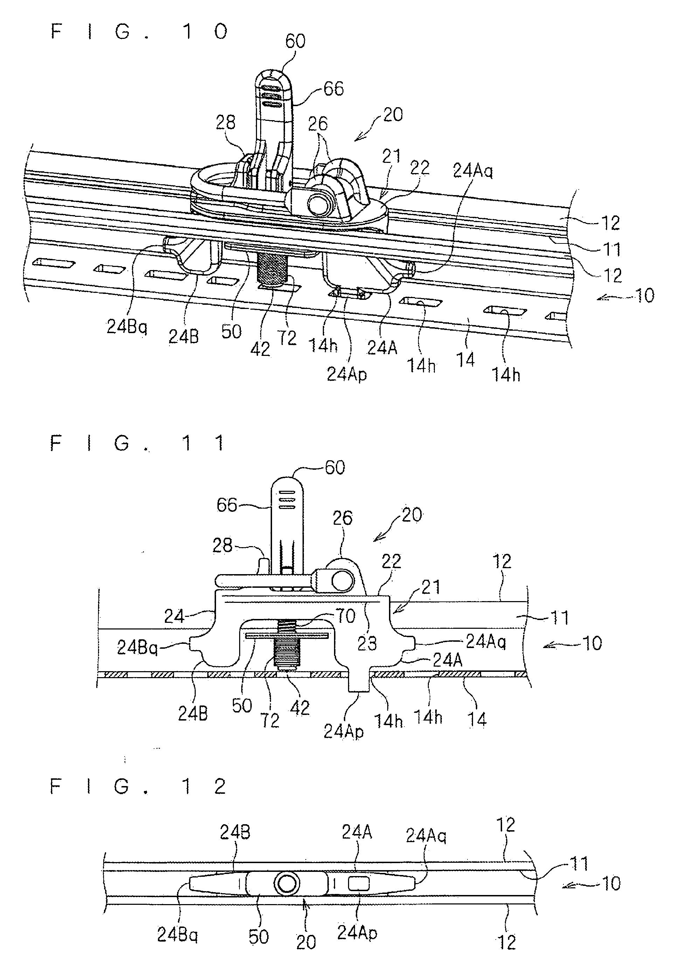

As shown in FIG. 10 to FIG. 12, then, the leg piece 24 and the locking part 50 are disposed in the guide rail 10 through the slit 11 and, at the same time, the abutting part 23 of the pedestal body part 22 is caused to abut against the outer surfaces of the pair of guide pieces 12. On this occasion, the positioning extended part 24Ap of the leg piece 24A is interlocked to the positioning recess 14h formed in the bottom part 14 so as to be fitted thereinto.

As shown in FIG. 13 and FIG. 14, then, the locking lever 60 is rotated about the axis of the shaft body 40, so that the long axis direction of the pedestal body part 22 and the longitudinal direction of the locking part 50 are substantially orthogonal to each other. This allows the locking part 50 to abut against both of the pair of guide pieces 12 from the inner surface sides thereof.

Note that in the state in which the positioning extended part 24Ap is not fitted into the positioning recess 14h and interferes with the bottom part 14, the pedestal body part 22 is positioned obliquely with respect to the guide rail 10 and, in this state, at least part of the locking part 50 is disposed in the slit 11. This shows that in the abnormal state in which the positioning extending part 24Ap is not fitted into the positioning recess 14h, the locking part 50 interferes with the pair of guide pieces 12, and accordingly the rotation of the locking part 50 is regulated, where locking is not allowed.

On this occasion, the locking part 50 is biased in the direction to be apart from the pedestal body part 22 by the coil spring 70, and thus a clearance large enough for disposing a pair of guide pieces 12 is formed between the abutting part 23 and the locking part 50. Accordingly, the locking part 50 is less prone to interfere with the pair of guide pieces 12 when the locking part 50 is rotated.

As shown in FIG. 16 and FIG. 17, then, the locking lever 60 is operated, so that the position of the locking lever 60 is changed from the unlocked position (standing position) to the locked position (lying position). Note that in this case, if the longitudinal direction of the locking part 50 is substantially orthogonal to the extending direction of the slit 11, the operation part 66 of the locking lever 60 is housed between the pair of bearing parts 26. Then, the other end of the shaft body 40 is pulled from the pedestal body part 22, and the fastening part for the locking part 42 at one end of the shaft body 40 moves in the direction to be close to the pedestal body part 22. Then, the fastening part for the locking part 42 pushes the locking part 50 into the pedestal body part 22 side through the intermediate elastic member 72. As a result, the pair of guide pieces 12 are sandwiched between the abutting part 23 and the locking part 50. On this occasion, the fastening part for the locking part 42 pushes the locking part 50 into the pedestal body part 22 side through the intermediate elastic member 72, and accordingly even in a case where the thickness dimensions of the pair of guide pieces 12 are uneven, the pair of guide pieces 12 can be sandwiched by a sandwiching force as constant as possible upon elastic deformation of the intermediate elastic member 72 in accordance with the unevenness. As described above, the cargo retaining device 20 is fastened at the fixed location with respect to the guide rail 10 in the extending direction thereof.

Alternatively, the cargo retaining device 20 can be demounted from the guide rail 10 in the opposite manner.

According to the cargo retaining device 20 configured as described above, the width dimension of the locking part 50 is smaller than the width dimension of the slit 11, and the length dimension of the locking part 50 is larger than the width dimension of the slit 11, whereby the locking part 50 is easily inserted into and removed from the slit 11. The position of the locking part 50 is changed from the unlocked position to the locked position in the state in which the locking part 50 is disposed in the guide rail 10 through the slit 11, with the result that the locking part 50 is pulled toward the pedestal body part 22 side and the pair of guide pieces 12 are sandwiched between the abutting part 23 and the locking part 50. This allows the cargo retaining device 20 to be fastened at the fixed location with respect to the guide rail 10. Alternatively, the cargo retaining device 20 can be removed from the guide rail 10 in the opposite manner. Accordingly, the cargo retaining device 20 can be easily mounted to and removed from the guide rail 10.

In the state in which the locking lever 60 is in the unlocked position, the locking part 50 is biased at the position apart from the pedestal body part 22 by the coil spring 70 with more reliability, and a maximum possible clearance is formed between the abutting part 23 and the locking part 50. This allows the pair of guide pieces 12 to be disposed between the abutting part 23 and the locking part 50 with ease, whereby the cargo retaining device 20 can be mounted more smoothly.

The leg piece 24 is formed in the pedestal body part 22, whereby the position of the pedestal part 21 can be maintained constant with respect to the extending direction of the slit 11. This allows, for example, the position of the interlocking part 30 constant with respect to the guide rail 10.

The pedestal part 21 is positioned with respect to the guide rail 10 in its extending direction by interlocking the positioning extended part 24Ap of the leg 24A to the positioning recess 14 formed in the bottom part 14 so as to be fitted thereinto, which allows the cargo retaining device 20 to be fastened at a fixed position with respect to the extending direction of the guide rail 10 with more reliability.

The locking lever 60 is operated to rotate about the axis of the shaft body 40, whereby the locking part 50 rotates about the axis of the shaft body 40 through the shaft body 40. Accordingly, in the state in which the pedestal part 21 is kept at the fixed position with respect to the extending direction of the slit 11, switching can be made between the state in which the locking part 50 is inserted into and removed from the slit 11 and the state in which the locking part 50 is caused to abut against the inner surfaces of the pair of guide pieces 12, which enables the cargo retaining device 20 to be mounted and removed more easily.

When the position of the locking lever 60 is changed to the locked position normally, the operation part 66 thereof is disposed between the pair of bearing parts 26. As a result, the operation part 66 is protected between the pair of bearing parts 26, and the other member or the like is less prone to be hung on the operation part 66. This prevents the cargo retaining device 20 from being unlocked inadvertently.

The shaft body 40 pulls the locking part 50 up to the pedestal body part 22 through the intermediate elastic member 72. Accordingly, even in a case where unevenness is found in the thickness of the pair of guide pieces 12, this unevenness is absorbed by the elastic deformation of the intermediate elastic member 72, which allows the retaining force for fastening to be kept with more ease.

The intermediate elastic member 72 is composed of a plurality of disc springs disposed in series, whereby it is possible to obtain a relatively large biasing force in the relatively limited space while maximizing the flexure amount of the intermediate elastic member 72.

The pedestal part 21 is made of zinc, and thus in a case where, the pedestal part 21 impacts the other member with severe force, the relatively cheap pedestal part 21 is damaged, to thereby prevent the other member from being damaged.

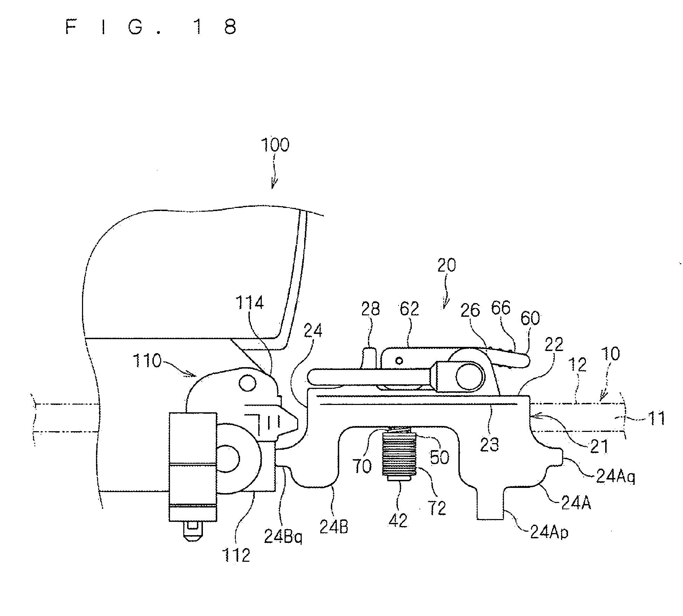

That is, as shown in FIG. 18, a seat 100 is moved back and forth in the state in which the cargo retaining device 20 is fastened at a fixed location of the guide rail 10. Normally, the seat 100 is movably supported with respect to the guide rail 10 by a guide member 110. The guide member 110 includes a body part 112 made of iron or the like and a resin portion 114. The body part 112 is the portion for supporting the load of the seat with respect to the guide rail 10, and the resin portion 114 is, for example, a resin cleaner for removing dust or the like in the guide rail 10.

Upon the seat 100 moving, the guide member 110 may impact the cargo retaining device 20 with severe force. In this case, in the present embodiment, the extending part 24Aq (or 24Bq) of the leg piece 24 first abuts against the body part 112 of the guide member 110, so that the resin portion 114 is prevented from being damaged. Further, in the case where the guide member 110 impacts the cargo retaining device 20 with more severe force, not the body part 112 of the guide member 110 but the pedestal part 21 made of zinc is damaged, whereby the guide member 110 can be prevented from being damaged. As described above, the pedestal part 21 is damaged, which prevents the other member that has impacted the pedestal part 21 from being damaged.

### <Modifications>

The locking part 50 is rotatable about the axis of the shaft body 40 with respect to the pedestal part 21 in the embodiment described above, which is not necessarily limited thereto. The cargo retaining device including the pedestal part may be entirely rotated after the locking part is disposed in the guide rail through the slit, so that the locking part is capable of abutting against the inner surfaces of a pair of guide pieces. In this case, the leg piece 24 and the like may be omitted.

Further, the locking lever 60 is in the unlocked position when being in the standing position and in the locked state when being in the lying position in the embodiment described above, which is not necessarily limited thereto. For example, the standing and lying states of the locking lever may be in the opposite relationship to the locked and unlocked positions.

Further, the configuration for maintaining the changed position state of the locking lever 60 is not limited to the example, of the embodiment described above. For example, the locking lever may be maintained in the lock position by hanging the other member on the locking lever.

## Claims

1. A cargo retaining device (20) for a vehicle, which is mountable to a guide rail (10) including a pair of guide pieces (12) opposed to each other through a slit (11), comprising:
a pedestal part (21) including an abutting part (23) configured to be located so as to straddle said pair of guide pieces (12);
an interlocking part (30) located on said pedestal part (21) for retaining a cargo;
a shaft body (40) movably supported by said pedestal part (21) along an axis direction such that one end thereof is projected from said abutting part side and that the other end thereof is projected from a side opposite to said abutting part (23); **characterised in that**
a locking part (50) formed into an elongated shape having a width dimension smaller than a width dimension of said slit (11) and a length dimension larger than said width dimension of said slit (11), and located so as to move close to and apart from said pedestal part (21) by being supported by the one end of said shaft body (40); and
a locking lever (60) supported by the other end of said shaft body (40) so as to change a position between a locked position for pulling said locking part (50) up to said pedestal part side and an unlocked position for allowing said locking part (50) to be apart from said pedestal part (21).

2. The cargo retaining device (20) for a vehicle according to Claim 1, further comprising a spacing elastic member (70) biasing said locking part (50) in a direction in which said locking part (50) goes apart from said pedestal part (21).

3. The cargo retaining device (20) for a vehicle according to Claim 1, wherein said pedestal part (21) includes a leg piece (24) movably located in said slit (11).

4. The cargo retaining device (20) for a vehicle according to Claim 3, wherein said leg piece (24) includes a positioning extended part (24Ap) formed so as to be engaged with a positioning recess (14h) of said guide rail (10), said positioning recess (14h) being formed to be opposed to said slit (11).

5. The cargo retaining device (20) for a vehicle according to Claim 1, wherein:
said locking part (50) is supported by the one end of said shaft body (40) so as not to rotate;
the other end of said shaft body (40) is supported by said pedestal part (21) so as to rotate; and
said locking part (50) is rotated about an axis of said shaft body (40) through said shaft body (40) upon said locking lever (60) being operated to rotate.

6. The cargo retaining device (20) for a vehicle according to Claim 1, wherein:
said pedestal part (21) includes a pair of bearing parts (26) provided in a projecting manner and supporting said interlocking part (30) such that a position thereof is changeable; and
said locking lever (60) is disposed between said pair of bearing parts (26) in said locked position.

7. The cargo retaining device (20) for a vehicle according to Claim 1, wherein:
said pedestal part (21) includes a pair of bearing parts (26) provided in a projecting manner and supporting said interlocking part (30) such that a position thereof is changeable; and
a ring member (34) is located between each of said pair of bearing parts (26) and each of both ends of said interlocking part (30) at which said interlocking part (30) is supported by said bearing parts (26).

8. The cargo retaining device (20) for a vehicle according to Claim 1, wherein said pedestal part (21) includes a lever receiving part (28) receiving said locking lever (60) upon said locking lever (60) changing the position to a standing position.

9. The cargo retaining device (20) for a vehicle according to Claim 1, wherein said pedestal part (21) includes a lock state display part (29a, 29b) showing the position of said locking lever (60).

10. The cargo retaining device (20) for a vehicle according to Claim 1, wherein said pedestal part (21) comprises zinc.

11. The cargo retaining device (20) for a vehicle according to Claim 1, wherein said shaft body (40) pulls said locking part (50) up to said pedestal part side through an intermediate elastic member (72) upon said locking lever (60) changing the position.

12. The cargo retaining device (20) for a vehicle according to Claim 11, wherein said intermediate elastic member (72) includes a plurality of disc springs (72a) disposed in series.

## Patentansprüche

1. Ladeguthaltevorrichtung (20) für ein Fahrzeug, welche an einer Führungsschiene (10) mit einem Paar einander über einen Schlitz (11) gegenüberliegenden Führungsstücken (12) befestigbar ist, aufweisend:
einen Trägerteil (21) mit einem Angrenzungsteil (23), der eingerichtet ist, derart angeordnet zu werden, dass er das Paar Führungstücke (12) überspannt;
einen Spannteil (30), der an dem Trägerteil (21) zum Halten eines Ladeguts angeordnet ist;
einen Schaftkörper (40), der durch den Trägerteil (21) entlang einer Achsrichtung bewegbar gestützt wird, so dass dessen eines Ende von der Seite des Angrenzungsteils hervorsteht und dessen anderes Ende von einer dem Angrenzungsteil (23) gegenüberliegenden Seite hervorsteht; **gekennzeichnet durch**
einen Arretierteil (50), der in einer länglichen Gestalt mit einer Breitenabmessung, die kleiner als eine Breitenabmessung des Schlitzes (11) ist, und mit einer Längenabmessung, die größer als die Breitenabmessung des Schlitzes (11) ist, ausgebildet ist und derart angeordnet werden kann, dass er sich **durch** Abstützung an dem einen Ende des Schaftkörpers (40) in Richtung zu dem Trägerteil (21) oder von letzterem wegbewegt; und
einen Arretierhebel (60), der **durch** das andere Ende des Schaftkörpers (40) derart abgestützt wird, dass er eine Position zwischen einer Arretierungsposition zum Heraufziehen des Arretierteils (50) zu der Seite des Trägerteils und einer Entriegelungsposition zum Zulassen, dass sich der Arretierteil (50) von dem Trägerteil (21) entfernt befindet, verändern kann.

2. Ladeguthaltevorrichtung (20) für ein Fahrzeug gemäß Anspruch 1, weiterhin aufweisend ein elastisches Abstandselement (70), das den Arretierteil (50) in einer Richtung vorspannt, in welcher der Arretierteil (50) sich von dem Trägerteil (21) entfernt.

3. Ladeguthaltevorrichtung (20) für ein Fahrzeug gemäß Anspruch 1, wobei der Trägerteil (21) ein Fußstück (24) umfasst, das bewegbar in dem Schlitz (11) angeordnet ist.

4. Ladeguthaltevorrichtung (20) für ein Fahrzeug gemäß Anspruch 3, wobei das Fußstück (24) einen verlängerten Positionierteil (24Ap) umfasst, der derart ausgebildet ist, dass er mit einer Positionieraussparung (14h) der Führungsschiene (10) in Eingriff gebracht werden kann, wobei die Positionieraussparung (14h) derart ausgebildet ist, dass sie dem Schlitz (11) gegenüberliegt.

5. Ladeguthaltevorrichtung (20) für ein Fahrzeug gemäß Anspruch 1, wobei
der Arretierteil (50) durch das eine Ende des Schaftkörpers (40) derart gestützt wird, dass er nicht dreht;
das andere Ende des Schaftkörpers (40) durch den Trägerteil (21) derart gestützt wird, dass es dreht; und
der Arretierteil (50) um eine Achse des Schaftkörpers (40) durch den Schaftkörper (40) bei Drehbetätigung des Arretierhebels (60) gedreht wird.

6. Ladeguthaltevorrichtung (20) für ein Fahrzeug gemäß Anspruch 1, wobei
der Trägerteil (21) ein Paar Lagerteile (26) umfasst, die in einer hervorstehenden Weise vorgesehen sind und den Spannteil (30) so stützen, dass eine Position des Spannteils (30) veränderbar ist; und
der Arretierhebel (60) zwischen dem Paar Lagerteilen (26) in der Arretierposition angeordnet ist.

7. Ladeguthaltevorrichtung (20) für ein Fahrzeug gemäß Anspruch 1, wobei
der Trägerteil (21) ein Paar Lagerteile (26) umfasst, die in einer hervorstehenden Weise vorgesehen sind und den Spannteil (30) derart stützen, dass eine Position des Spannteils (30) veränderbar ist; und
ein Ringelement (34) zwischen jedem Lagerteil (26) des Paars Lagerteile (26) und jedem Ende der beiden Enden des Spannteils (30) angeordnet ist, bei welchen der Spannteil (30) durch die jeweiligen Lagerteile (26) gestützt wird.

8. Ladeguthaltevorrichtung (20) für ein Fahrzeug gemäß Anspruch 1, wobei der Trägerteil (21) einen Hebelaufnahmeteil (28) umfasst, der den Arretierhebel (60) aufnimmt, wenn der Arretierhebel (60) die Position zu einer Standposition verändert.

9. Ladeguthaltevorrichtung (20) für ein Fahrzeug gemäß Anspruch 1, wobei der Trägerteil (21) einen Arretierzustandsanzeigeteil (29a, 29b) umfasst, der die Position des Arretierhebels (60) anzeigt.

10. Ladeguthaltevorrichtung (20) für ein Fahrzeug gemäß Anspruch 1, wobei der Trägerteil (21) Zink aufweist.

11. Ladeguthaltevorrichtung (20) für ein Fahrzeug gemäß Anspruch 1, wobei der Schaftkörper (40) den Arretierteil (50) nach oben zu der Seite des Trägerteils durch ein elastisches Zwischenelement (72) zieht, wenn der Arretierhebel (60) die Position verändert.

12. Ladeguthaltevorrichtung (20) für ein Fahrzeug gemäß Anspruch 11, wobei das elastische Zwischenelement (72) eine Vielzahl von in Reihe angeordneten Tellerfedern (72a) umfasst.

## Revendications

1. Dispositif de retenue de chargement (20) pour véhicule, qui peut être monté sur un rail de guidage (10) incluant une paire de pièces de guidage (12) opposées l'une à l'autre à travers une fente (11), comprenant :
une partie de socle (21) incluant une partie contiguë (23) configurée pour être située de façon à enjamber ladite paire de pièces de guidage (12) ;
une partie d'emboîtement (30) située sur ladite partie de socle (21) permettant de retenir un chargement ;
un corps d'arbre (40) supporté avec faculté de mouvement par ladite partie de socle (21) le long d'une direction d'axe de sorte qu'une extrémité de celui-ci fait saillie dudit côté de la partie contiguë et que l'autre extrémité de celui-ci fait saillie d'un côté opposé à ladite partie contiguë (23) ;
**caractérisé en ce que**
une partie de verrouillage (50) formée en une forme allongée ayant une dimension de largeur plus petite qu'une dimension de largeur de ladite fente (11) et une dimension de longueur plus grande que ladite dimension de largeur de ladite fente (11), et située de façon à se rapprocher et s'éloigner de ladite partie de socle (21) en étant supportée par ladite extrémité dudit corps d'arbre (40) ; et
un levier de verrouillage (60) supporté par l'autre extrémité dudit corps d'arbre (40) de façon à changer une position entre une position verrouillée permettant de tirer ladite partie de verrouillage (50) jusqu'audit côté de partie de socle et une position non déverrouillée permettant d'éloigner ladite partie de verrouillage (50) de ladite partie de socle (21).

2. Dispositif de retenue de chargement (20) pour véhicule selon la revendication 1, comprenant en outre un organe élastique d'espacement (70) sollicitant ladite partie de verrouillage (50) dans une direction dans laquelle ladite partie de verrouillage (50) s'éloigne de ladite partie de socle (21).

3. Dispositif de retenue de chargement (20) pour véhicule selon la revendication 1, dans lequel ladite partie de socle (21) inclut une pièce de jambage (24) située avec faculté de mouvement dans ladite fente (11).

4. Dispositif de retenue de chargement (20) pour véhicule selon la revendication 3, dans lequel ladite pièce de jambage (24) inclut une partie étendue de positionnement (24Ap) formée de façon à être mise en prise avec un évidement de positionnement (14h) dudit rail de guidage (10), ledit évidement de positionnement (14h) étant formé pour être opposé à ladite fente (11).

5. Dispositif de retenue de chargement (20) pour véhicule selon la revendication 1, dans lequel :
ladite partie de verrouillage (50) est supportée par l'une des extrémités dudit corps d'arbre (40) de façon à ne pas tourner ;
l'autre extrémité dudit corps d'arbre (40) est supportée par ladite partie de socle (21) de façon à tourner ; et
ladite partie de verrouillage (50) tourne autour d'un axe dudit corps d'arbre (40) par l'intermédiaire dudit corps d'arbre (40) lorsque ledit levier de verrouillage (60) est actionné pour tourner.

6. Dispositif de retenue de chargement (20) pour véhicule selon la revendication 1, dans lequel :
ladite partie de socle (21) inclut une paire de parties d'appui (26) disposée de manière saillante et supportant ladite partie d'emboîtement (30) de sorte qu'une position de celle-ci peut être changée ; et
ledit levier de verrouillage (60) est disposé entre ladite paire de parties d'appui (26) dans ladite position verrouillée.

7. Dispositif de retenue de chargement (20) pour véhicule selon la revendication 1, dans lequel :
ladite partie de socle (21) inclut une paire de parties d'appui (26) disposée de manière saillante et supportant ladite partie d'emboîtement (30) de sorte qu'une position de celle-ci peut être changée ; et
un organe de bague (34) est situé entre chacune de ladite paire de parties d'appui (26) et chacune des deux extrémités de ladite partie d'emboîtement (30) où ladite partie d'emboîtement (30) est supportée par lesdites parties d'appui (26).

8. Dispositif de retenue de chargement (20) pour véhicule selon la revendication 1, dans lequel ladite partie de socle (21) inclut une partie de réception de levier (28) recevant ledit levier de verrouillage (60) lorsque ledit levier de verrouillage (60) change la position en une position debout.

9. Dispositif de retenue de chargement (20) pour véhicule selon la revendication 1, dans lequel ladite partie de socle (21) inclut une partie d'affichage d'état de verrouillage (29a, 29b) montrant la position dudit levier de verrouillage (60).

10. Dispositif de retenue de chargement (20) pour véhicule selon la revendication 1, dans lequel ladite partie de socle (21) comprend du zinc.

11. Dispositif de retenue de chargement (20) pour véhicule selon la revendication 1, dans lequel ledit corps d'arbre (40) tire ladite partie de verrouillage (50) jusqu'audit côté de la partie de socle par l'intermédiaire d'un organe élastique intermédiaire (72) lorsque ledit levier de verrouillage (60) change de position.

12. Dispositif de retenue de chargement (20) pour véhicule selon la revendication 11, dans lequel ledit organe élastique intermédiaire (72) inclut une pluralité de ressorts à disque (72a) disposés en série.
